Europäisches Patentamt

European Patent Office

Office européen des brevets

(11) Publication number: **0 117 136 B1**

(12) **EUROPEAN PATENT SPECIFICATION**

(45) Date of publication of patent specification: 25.01.89

(51) Int. Cl.⁴: **G 21 B 1/00**

(21) Application number: 84301036.4

(22) Date of filing: 17.02.84

(54) Nuclear fusion reactor.

(30) Priority: 18.02.83 JP 24633/83

(43) Date of publication of application:
29.08.84 Bulletin 84/35

(45) Publication of the grant of the patent:
25.01.89 Bulletin 89/04

(84) Designated Contracting States:
DE FR GB

(56) References cited:
DE-A-3 125 970
JOURNAL OF NUCLEAR MATERIALS, vol. 103
& 104, 1981, pages 223-228, North-Holland
Publishing Co., Amsterdam, NL; J.R. HAINES
et al.:"Material considerations for the fusion
engineering device (FED) pump limiter"
NUCLEAR TECHNOLOGY/FUSION, vol. 2, no.
4, October 1982, pages 712-722, ANS; Danville,
US; H.W. KUGEL et al.: "The design of the
Poloidal Divertor Experiment Tokamak wall
armor and inner limiter system"

(73) Proprietor: HITACHI, LTD.
6, Kanda Surugadai 4-chome Chiyoda-ku
Tokyo (JP)

(72) Inventor: Okamura, Hisanori
174-53, Midorigoaka-danchi Toukai-mura
Naka-gun Ibaraki-ken (JP)
Inventor: Miyazaki, Kunio
2598-5 Ohkubo-cho
Hitachi-shi Ibaraki-ken (JP)
Inventor: Akiyama, Hiroshi
1-15-3 Ishinazaka-cho
Hitachi-shi Ibaraki-ken (JP)
Inventor: Itoh, Shinichi
3-1-26 Jounan-cho
Hitachi-shi Ibaraki-ken (JP)
Inventor: Yasuda, Tomio
4-12-36 Takasuzu-cho
Hitachi-shi Ibaraki-ken (JP)
Inventor: Nakamura, Kousuke
1-1-39 Ishinazaka-cho
Hitachi-shi Ibaraki-ken (JP)
Inventor: Okoshi, Yukio
886-2 Motoyoshida-cho
Mito-shi Ibaraki-ken (JP)
Inventor: Kamoshita, Mutuo
3196 Higashiishikawa
Katsuta-shi Ibaraki-ken (JP)

# EP 0 117 136 B1

(72) Inventor: **Chiba, Akio**
**3808-91 Ogitsu-cho**
**Hitachi-shi Ibaraki-ken (JP)**

(74) Representative: **Paget, Hugh Charles Edward**
**et al**
**MEWBURN ELLIS & CO. 2/3 Cursitor Street**
**London EC4A 1BQ (GB)**

**Description**

This invention relates to a nuclear fusion reactor and especially to the wall structure of the vacuum vessel of such a reactor.

Inside a nuclear fusion reactor, e.g. a torus-type nuclear fusion reactor, there is disposed a ring-like vacuum vessel for confining plasma. The vacuum vessel is surrounded by toroidal magnetic field coils which create the magnetic field keeping the plasma fixed in the space. The coils are plurally distributed around the vacuum vessel at the fixed intervals. Poloidal magnetic field coils are plurally distributed along the vacuum vessel, to create the magnetic field which heats the plasma and controls its position.

Non-magnetic alloy steel containing nickel has been proposed as the material of this vacuum vessel. The vacuum vessel of the nuclear fusion reactor deteriorates under the radiation of the nuclear fusion reaction, e.g. irradiation by fast neutrons of 14 MeV. It has therefore been proposed that Mo plate or W plate etc. of high melting point may be bolted to the water-cooled metal-base body of the vacuum vessel as described in Japanese laid-open Patent JP—A—55-94181.

However, Mo or W etc. have such big atomic numbers that they are spattered by plasma particles and permeate the plasma, lowering the temperature of the plasma.

It is also a serious flaw for the nuclear fusion reactor which is exposed to high temperature and is barely cooled, that there is a high thermal resistance between the water-cooled metal-based body and Mo or W plates bolted as described above.

Use of heat-resistant ceramic tiles bonded to a metal body is disclosed in J. R. Haines et al "Material considerations for the fusion engineering device FED pump limiter" in the "Journal of Nuclear Materials" 103 and 104, 1981. This disclosure suffers the disadvantage that cracking occurs in the ceramic tile due to thermal stress at the joint between ceramic tile and metal body.

It is an object of this invention to provide a nuclear fusion reactor with reactor wall which can have strong structural members while also having excellent cooling properties, with low thermal stress.

This invention provides a nuclear fusion reactor which has a vacuum vessel for confining plasma coils around the vacuum vessel to generate a magnetic field, and a reactor wall to be exposed in use to plasma, the reactor wall being made by metallurgically binding a plurality of divided tiles of a heat-resisting ceramics material to metal body having cooling means, there being an intermediate material having a lower coefficient of thermal expansion than that of the metal body. Preferably there are gaps formed between adjoining ceramic tiles and grooves at locations corresponding to the gaps in the metal body.

The ceramic tiles are thus bound to the metal body through buffer material to relieve the difference of thermal expansion between them, the buffer material being the intermediate material having a coefficient of thermal expansion intermediate between them. The metal body and the tiles thereon are desirably so arranged that the metal body avoids direct irradiation by plasma particles.

General features and embodiments of the invention will now be described by way of example with reference to the accompanying drawings in which:—

Fig. 1 is the sectional view of the vacuum vessel of a toroidal nuclear reactor embodying this invention;

Fig. 2, Fig. 4, and Fig. 7 are perspective views of reactor wall constructions of this invention;

Fig. 3 is a sectional view on line A—A' in Fig. 2;

Fig. 5 is a sectional view on line B—B' in Fig. 4;

Fig. 6 is another sectional view on line B''—B''' in Fig. 4;

Fig. 8 is a sectional view on line C—C' in Fig. 7;

Fig. 9 is a diagram showing the relation between the modulus of elasticity and coefficient of thermal expansion of the intermediate material.

(1) Ceramic tiles

The ceramics tiles should have excellent spatter-proof qualities under irradiation by plasma particles. Therefore, it is preferable for the ceramics material to be heat-resisting and especially for it to be made of compounds of elements of low atomic numbers. The coefficient of thermal conductivity of the ceramic tile material is preferably more than 0.05 cal/cm.sec.°C and preferably the electrical resistance more than $10^{-3}$ $\Omega \cdot$/cm at room temperature (20°C) for both. It is less damaged by spattering when it has a higher coefficient of thermal conductivity because of the greater cooling effect. Thus, for example, the temperature of the ceramics tiles can be kept low enough to resist spattering, when its thermal conductivity is more than 0.4 cal/cm.sec. °C, preferably more than 0.5 cal/cm.sec. °C. If it has a high electrical conductivity, it is given a strong magnetomotive-force by the magnetic field due to the eddy current effect, since a strong magnetic field is generated in the reactor wall. Thus, a material with electrical resistance of more than $10^{-3}$ $\Omega \cdot$ cm at room temperature is preferable, and especially electric insulators having an electric resistance of more than $10^8$ $\Omega \cdot$ cm are desirable.

The ceramics tiles are preferably composed of a sintered ceramics of refractory compounds having a melting point higher than 1900°C. This temperature is desirable for the spatter-proof property as well.

Oxides, carbides, nitrides and silicides etc. of metals can be used as the material for ceramic tiles. Oxides e.g. $BeO$, $MgO$, $Al_2O_3$, $SiO_2$, $CaO$, $TiO_2$, $Cr_2O_3$, $Fe_2O_3$, $Y_2O_3$, $ZrO_2$ etc., carbides e.g. $Cr_3C_2$, $NbC$, $ZrC$, $Be_2C$, $SiC$, $TiC$, $VC$ etc., nitrides e.g. $AlN$, $Si_3N_4$, $TiN$, $VN$, $ZrN$, $NbN$, $TaN$ etc. and silicides e.g. Ti-silicide, Zr-silicide, V-Silicide, Nb-silicide, Ta-silicide, Cr-silicide etc. may for example be used. Among these various materials, compounds of elements of low atomic numbers (i.e. less than 14) are especially preferred.

For example, compounds of Si, Al, Mg and Be are preferred, e.g. SiC, AlN, $Si_3N_4$, BeO, $Al_2O_3$, MgO and $SiO_2$, or mixtures or compounds of them. These compounds may be used as the raw materials of sintered ceramics, or compounds which produce these compounds may be used.

Especially preferred for the ceramic tiles is a sintered ceramics material which contains Be, e.g. 0.1—5% of total Be by weight, in the form of metallic Be or a Be compound, the balance being at least 80% of silicon carbide in weight, because its thermal conductivity is much higher than 0.2 cal/cm.sec. °C and its electrical resistance is more than $10^8$ $\Omega \cdot cm$ at room temperature. A sintered silicon carbide ceramics, incorporating a small amount of beryllium oxide, e.g. 0.05—10% by weight, is especially preferred because its thermal conductivity is higher than 0.4 cal/cm.sec. °C and the electrical resistance is more than $10^8$ $\Omega \cdot cm$ at room temperature.

The divided ceramic tiles can be joined metallurgically by various methods to the metal body. The larger the surface area of the tiles the cheaper is the manufacturing process, but if it is too large, the tile may be more likely to break because thermal stress increases after bonding to the metal substrate. Therefore, the preferable size is 10 cm square and 20 mm thick at most. The thickness is more preferably in the range 5—10 mm. Ceramics tiles may be manufactured by pressureless sintering, pressure sintering or any other methods.

In order to avoid irradiation by plasma particles of the metal-base body and solder material, it is preferable to overlap the edges of the ceramic tiles so as to provide a complete shield where needed. Thus the edges may be stepped to permit lapping or they may lean on each other. Instead of lapping the edges of the ceramic tiles, they may be arranged with predetermined gaps between them and ceramic bar may be inserted in the groove of the metal-base body.

(2) Metal body forming a base with cooling structure

The material of this metal body (hereinafter called the metal-base body) must be non-magnetic at the temperature of use. As the metal-base body, austenite steel, copper, copper alloy, aluminium, aluminium alloy, titanium, titanium alloy and nickel-base alloy can be used. The cooling structure may be composed of a body assembled by partial seam welding, which has space for flowing refrigerant e.g. water. This space may be manufactured by putting the non-welded part of the constructed body in a form or mould and expanding it with high pressure air. This is called a corrugate structure. Another partial bonding method is diffusion bonding, pressure welding, brazing and so on.

A plurality of grooves are preferably formed in the metal-base body. The hollow parts of the corrugate structure having the space made by high pressure air described above may be utilized for the grooves. The grooves can be formed by cutting a metal plate. The grooves act to reduce thermal stress when the ceramics tiles are bonded and the nuclear fusion reactor is in operation. The width of the grooves may be wide enough to prevent neighbouring tiles from touching and forcing out the solder material between them when they are soldered. The neighbouring ceramics tiles then are not bound together because surplus solder flows into the groove and does not remain in the gaps between them. Consequently, thermal stress caused by the cooling of metal base-body after bonding can be reduced.

More than 1 mm is preferred for the width of the groove, but this width may be small so long as enough bonding strength of the ceramic tiles is obtained. The grooves can extend in one direction or in both the directions of length and breadth on the surface of the metal-base body. For ease of manufacture, the former is preferable, while the latter is preferable from the point of view of stress relief.

The metal-base body, on which a plurality of ceramic tiles can be bonded, may itself be divided as well. The divided metal-base body is fixed in the furnace wall of the nuclear fusion reactor by bonding mechanically to other constructional parts or by welding to each other after the bonding of ceramic tiles thereto. In the composition, it needs to be made with enough precision of size to eliminate surplus resistance against the flow of refrigerant and to be composed under the prudent position setting. Also in the structure of each block of the metallic body, the ceramic tiles are preferably arranged to cover the surface of the metal as described above, lest the metallic body should be irradiated by the plasma particles.

(3) Bonding of the ceramics tiles

The ceramics tiles are metallurgically bonded to the metal-base body. Metallurgical bonding includes e.g. brazing, diffusion bonding, anodic bonding etc. and does not include physical or mechanical bonding e.g. bolting, fitting, etc. The gaps between the ceramics tiles reduce thermal stress, and the thermal stress of the bonding layer is relaxed by the contraction of the metal-base body after bonding. Therefore, cracking and tearing off of the ceramics tiles can be prevented and the tiles bond tightly to the base-body.

The width of the gap is determined considering the volume of the expansion and contraction in operation. When bonding by brazing, the melting point of bonding material must be lower than that of the metal-base body. Copper alloy containing manganese and silver is preferred for the bonding material when stainless steel or nickel base alloy is used for the metal-base body. Since bonding materials can be used at about 900°C. The gap between tiles before bonding should be at least as wide as the difference between the contraction of the metal-base body and that of the ceramics in cooling from the bonding temperature to room temperature, and naturally a tolerance may be included.

Copper alloy containing 25—55% manganese by weight may preferably be used as the copper alloy brazing material mentioned above. The melting point of this alloy is 870°—1,000°C, so that bonding at comparatively low temperatures becomes possible. Especially preferred are copper alloys containing 35—45% manganese by weight. This bonding material is available for the bonding of the tiles composed of non-oxide ceramics and more effective for the bonding of carbide. Such copper-manganese alloys are for example effective for the bonding to a nickel base alloy of ceramics containing 0.1—5% by weight of Be (as Be metal or in one or more Be compounds) and at least 80% in weight of silicon carbide which is electrically insulating at room temperature.

Silver solders e.g. according to the appropriate JIS Standard are available for bonding at high temperatures. When a ceramics composed of metal oxide, e.g. alumina, is bonded to a stainless steel or nickel base alloy, a silver solder should be used with a metallized layer of Mo-Mn etc. on the bonding surface.

When the metal-base body is of aluminium or aluminium alloy, a brazing material of aluminium alloy containing 8—15% silicon by weight is preferable. This brazing alloy can braze at about 550—620°C. The gaps between the ceramic tiles before bonding are controlled according to the brazing temperature. This brazing material is effective to bond ceramics tiles of sintered material whose principal ingredient is silicon carbide, to a substrate of aluminium or aluminium-alloy.

In order to bond the ceramics tiles to the metal-base body, the tiles can be bonded by heating under their own weight or under a pressure of 1—20 kg/cm$^2$, which is applied over the whole surface of the metal-base body through the interposed bonding material. The atmosphere under heating is air or a non-oxidizing atmosphere. The thickness or depth of the bonding layer is preferably 10—100 μm.

(4) Intermediate material

It is preferred for the intermediate material, which supports the ceramics tiles on the metal-base body, to be composed of a metallic material having a coefficient of thermal expansion intermediate between those of the ceramics tiles and the metal-base body. Examples are tungsten, molybdenum, invar alloy, metallic composite materials and composite materials of metals of high thermal conductivity with fibers of molybdenum, tungsten and carbon buried in them. Especially preferred is a composite material of copper in which carbon fibers are buried.

This carbon fiber-reinforced copper composite material is prepared by hot-pressing stacked copper-clad carbon fiber cloths at a temperature high enough to unite the cloths. The copper-clad carbon fibers are covered by a thin copper film in the form of bundles. The bundles are woven two-dimensionally. This provides a two-dimensionally equidirectional coefficient of thermal expansion. This composite material does not reduce the coefficient of thermal conductivity in the direction of the thickness of the composite. The composite has a coefficient of thermal expansion of 5—10×10$^{-6}$/°C and thermal conductivity of 0.3—1.0 cal/cm.sec. °C at room temperature. The carbon fibers are preferably in an amount of 30—60% by volume. Up to 5% by weight of elements (such as Ti, Cr, V etc.) forming carbides with carbon fibers may be present in the matrix of copper as well.

The intermediate material made of this copper-carbon fiber composite material is effective for bonding the sintered silicon carbide ceramics described above to the metal-base body. Particularly when this intermediate material has a modulus of elasticity of 5—13×10$^3$ kg/mm$^2$ and a coefficient of thermal expansion of 3—12×10$^{-6}$/°C (both at room temperature), it is effective for bonding the silicon carbide ceramics to the metal-base body. Materials other than a copper-carbon fiber composite material can also be advantageously used for bonding the sintered silicon carbide ceramics to the metal-base body, if they have the same modulus of elasticity and coefficient of thermal expansion as above.

It is preferred for the intermediate materials to be bonded with clearance between them to the metal-base body so that they are arranged between grooves made on the metal-base body, like the ceramics tiles. The ceramics tiles are bonded on the intermediate materials with clearance between neighbours. Instead of making grooves on the metal-base body having a cooling structure, the ceramics tiles may be bonded apart from each other on the intermediate material with grooves made in the latter.

It is preferred when bonding ceramic tiles of sintered silicon carbide face-to-face to the above-described copper-carbon fiber composite material, to use the above-mentioned copper-manganese alloy solder. In order to bond this copper-carbon fiber composite material to a metal-base body composed of aluminium, the ceramics tiles and the composite material are previously bonded by the copper-manganese alloy solder. Then, the composite material is placed upon aluminium and is heated to about 548°C and bonded at a predetermined pressure. In this case, the composite material whose the principal ingredient is copper can be bonded by eutectic reaction between the composite material and aluminium.

The thickness of the intermediate material is preferably more than 0.5 mm, because in this case the intermediate material, can act as a cushion which sufficiently relieves the difference in the coefficient of thermal expansion at the bonding area between the ceramics and the metal-base body. The effect of the intermediate material is considered not to increase when its thickness exceeds about 2 mm. Owing to the intermediate material, ceramic tiles of larger area can be bonded to the base without cracking, because the intermediate material reduces thermal stress at the bonding area.

Example 1

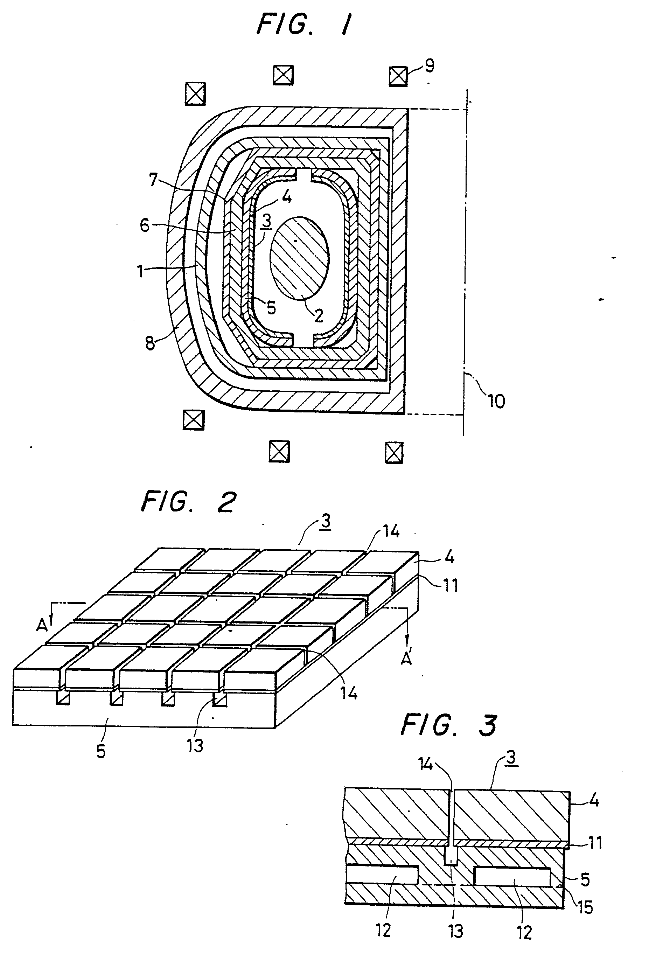

Fig. 1 is the sectional view of a torus-type nuclear fusion reactor employing the reactor wall construction of this invention. The vacuum vessel 1 is a torus around the center line 10 forming a base line and in operation plasma 2 is generated in its interior space. The toroidal magnetic field coils 8, which generate a doughnutlike magnetic field for enclosing plasma 2 in the interior space of vacuum vessel 1, are distributed at the fixed intervals along the vacuum vessel 1. These magnetic coils 8 are super conducting coils which are cooled by liquid helium. Around the toroidal magnetic coils 8, a plurality of poloidal coils 9 are distributed so as to control the position of plasma 2.

The interior of the vacuum vessel 1 is evacuated by a vacuum exhauster (not shown). A reactor wall 3 of this invention is arranged near the plasma 2, and a breeding bracket 6 and a shelter 7 are arranged outside the reactor wall in the vacuum vessel 1. The reactor wall 3 is located against the breeding bracket 6 and is constructed by bonding ceramics tiles 4 to the metal-base body 5 which is provided with cooling means whereby refrigerant is circulated.

Figs. 2 and 3 show that the reactor wall 3 is constructed by bonding the ceramics tiles 4 through the bonding layer 11 to the metal-base body 5 having a cooling structure including conduits 12 for the flow of refrigerant. The ceramics tiles 4 are arranged with gaps 14 between them. Each assembly unit as shown in Fig. 2 is bonded by welding or bolting, etc. to other such units and the wall 3 is thus constructed as is shown in Fig. 1. 25 individual ceramics tiles 4 are shown bonded in Fig. 2, but this number may be varied. The broken line 15 in Fig. 3 shows the bonding plane where the metal-base body 5 has a cooling structure. In the surface of the metal-base body 5 grooves 13 run longitudinally at fixed intervals and (as shown) there may be grooves 13 in the transverse direction as well.

When the ceramics tiles 4 are bonded to the metal-base body 5 by the bonding material, the size of which is the same as the plane size of the metal-base body 5 or is adapted to the size of the ceramics tiles, any excess amount of a brazing material is let into the grooves 13. Thus, the bonding to each other of the ceramics tiles by the brazing material can be avoided. Moreover, thermal stress can be reduced, because the expansion and contraction of the ceramics tiles, which are caused by heating and cooling during manufacture or operation of the vacuum vessel, are not prevented.

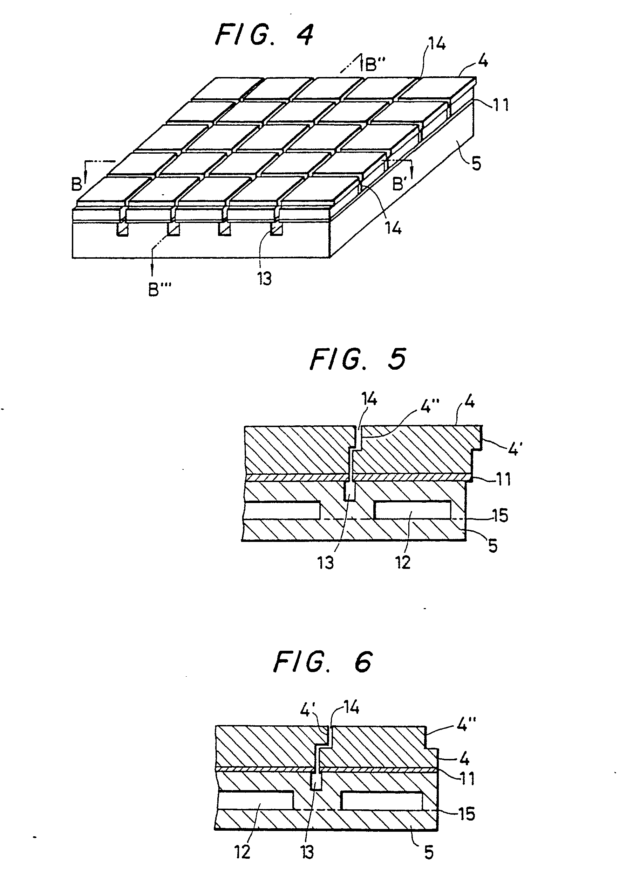

Figs. 4 and 5 show another form of unit of reactor wall 3, in which the ceramics tiles are shaped and arranged that edges of the tiles are superposed (overlapping), in order to prevent the metal-base body being directly irradiated by plasma 2. The edges of the ceramics tiles are formed stepwise with projecting part 4' and recessed part 4'', so that the projecting part 4' overlaps with the cut part 4'', so that the metal-base body is prevented from being exposed to plasma through the gap 14. The projecting parts 4' and cut parts 4'' are arranged in both the longitudinal and transverse directions. Alternatively, in order to lap edges of the ceramics tiles over the edges of adjoining tiles so as to avoid exposure of the metal-base body 5, the tile edges may be inclined or one edge of the tile may project into the edge of another (mortice and tenon).

Fig. 6 is a sectional view of another arrangement in which the ceramics tiles 4 all have the same shape and are bonded to the metal-base body side by side alternately with "top" and "bottom" faces upwardly. This sectional view corresponds to that of the section B—B' of Fig. 4.

One method for bonding the ceramics tiles to the metal-base body is as follows. The metal-base body 5 was made of an aluminium plate, which was 5 mm thick, or a stainless steel plate of SUS 304 in JIS standard, which was 2 mm thick.

The material of the ceramics tiles was sintered $Si_3N_4$, the density of which was more than 98% of the theoretical density. A sintered ceramics of $Al_2O_3$ and SiC, which contained BeO 2% in weight, was alternatively used, in which case beryllium oxide was observed as precipitates at the boundaries of crystal grains of SiC. The tiles were 10 mm thick and 20 mm×20 mm square. The characteristics of these ceramics are shown in Table 1. The bonding surface of the tiles was ground to give a surface roughness of less than 10 μm. As the brazing material, a foil 25 μm thick, composed of Mn 40% in weight and the balance Cu, was used for SUS 304, and a foil 50 μm thick, composed of Si 12% in weight and the balance Al, was used for aluminium after the bonding surface of ceramic tiles was metallized. The ceramic tiles and the metal-base body were pressed together under a pressure of 5—10 kg/cm² and heated in an Ar atmosphere by a high frequency heating coil. The heating temperature was 860°C for SUS 304, and 580°C for aluminium. After heating, the assemblies were cooled in air. The melted brazing material mostly remained between the bonding surfaces, but only a little was extruded from the bonding surfaces. In order to make the sintered SiC ceramics, a mixture of powder materials was molded under a pressure of 1,000 kg/cm² and then the molding was sintered by heating for one hour at 2,000°C under the pressure of 300 kg/cm² in an atmosphere of $10^{-5}$—$10^{-3}$ torr.

It was ascertained that this method of bonding the ceramic tiles to the metal-base body is good enough to prevent cracking or tearing of the ceramic tiles from the base body.

|  | Thermal conductivity | Coefficient of thermal expansion | Electric resistance | Melting point |
|---|---|---|---|---|
|  | (cal/cm.sec. °C) | ($\times 10^{-6}$/°C) | ($\Omega$cm) | (°C) |
| $Al_2O_3$ | 0.07 | 8.5 | $>10^{15}$ | 2040 |
| SiC | 0.65 | 3.7 | $>10^{14}$ | No melting point (Decomposition) |
| $Si_3N_4$ | 0.07 | 2.5 | $>10^{13}$ | 1900 |

Example 2

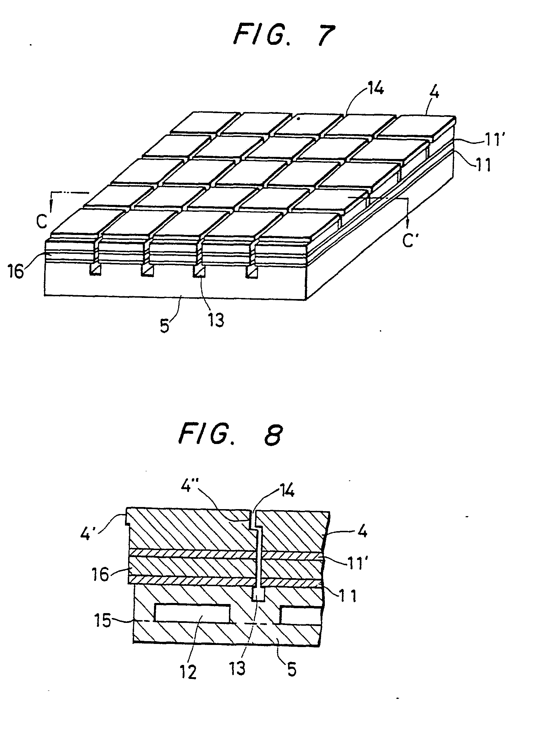

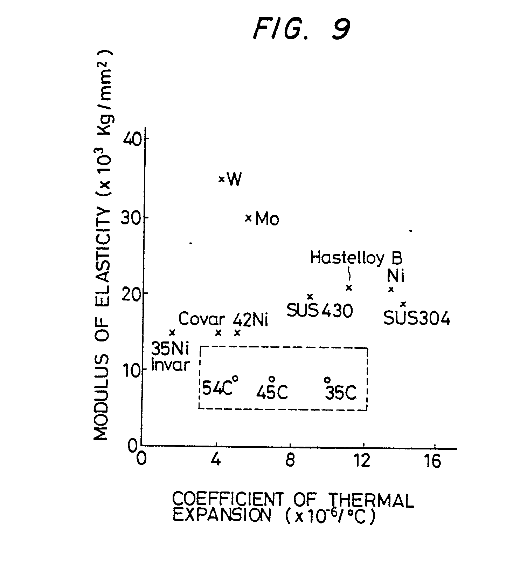

Figs. 7 and 8 show a unit block composed of ceramic tiles 4 and metal-base body 5 with cooling means, bonded to each other through an intermediate material 16, with gaps 14 between the tiles 4 as in Fig. 4, and the ends of the tiles 4 formed stepwise so that the tiles overlap each other to prevent the metal-base body 5 being irradiated by plasma particle 2.

Grooves 13 are made in the metal-base body corresponding to the gaps 14. The gaps 14 can be smaller than the grooves 13 in width, because the gaps 14 have only to prevent the generation of thermal stress due to the thermal expansion in operation. The stress exerted on the ceramic tiles and the metal-base body can be reduced by selecting an intermediate material 16 of a suitable coefficient of thermal expansion at room temperature and a suitable modulus of elasticity. The bonding method is as follows. A sintered SiC ceramics of 10 mm thick and 40 mm square, which was made in the same way as in Example 1, was used for the ceramic tiles, and a copper-carbon fiber composite material was used as the intermediate material.

The copper-carbon fiber composite material was made as follows. Carbon fibers of several μm in diameter were plated with copper to a thickness of several μm by electroless copper plating. Bundles of the copper-plated carbon fibers consisting of several thousand fibers were woven into a plain weave. Five sheets of this weave were superposed and then heated and pressed at 800°C in an atmosphere of nitrogen to make a sheet of composite material of 1 mm in thickness. Any desired thickness can be obtained by stacking the necessary number of the woven sheets. This composite material is useful because of its characteristics and smoothness of finishing. Instead of weaving a fabric, the techniques of curling fibers and of dispersing short fibers may be applied.

The Cu-C fiber composite material made as above and the sintered SiC were bonded by heating at 860°C under a pressure of 5—10 kg/cm² using a 50 μm thick layer of bonding material composed of 40% manganese by weight with the rest being copper. Three kinds of Cu-C fiber composite, containing 35%, 45% and 54% carbon fibre by volume respectively, were made.

Various other kinds of intermediate material, e.g. various metals and alloys of different coefficient of thermal expansion and different modulus of elasticity, were also used, these being an invar alloy containing Ni35% and Ni42%, kovar, SUS 430, hastealloy B, pure Ni, Mo, and W. A brazing material layer, which is composed of 40% Mn by weight the rest Cu and is 50 μm thick, was interposed between the sintered SiC and the intermediate material. Then a foil of silver solder, of 30% Cu and 70% Ag by weight and 100 μm thick, was interposed between the intermediate material and a SUS 304 stainless steel plate. The assembly was heated at 860°C under a pressure of 5—10 kg/cm² in an atmosphere of Ar to unite the assembly.

Fig. 9 shows the coefficient of thermal expansion at room temperature and modulus of elasticity of the intermediate materials described above and the bonding properties. The Cu-C fiber composites are identified as 54C, 45C and 35C, and the invar alloys as 35Ni and 42Ni. The Cu-C fiber composite material can be bonded without any cracking and tearing off, because its modulus of elasticity can be selectively regulated by the quantity of carbon fibers. In the figure, marks X show the occurrence of cracking in the sintered SiC, marks Δ show where the bonding strength was less than 5 kg/mm², and marks o show where the bonding strength was more than 30 kg/mm². It was clear that a high bonding strength was obtained when the intermediate material had the coefficient of thermal expansion of 3—12×10⁻⁶/°C at room temperature and modulus of elasticity of 5—13×10¹³ kg/mm², as indicated by the broken line box in Fig. 9.

Example 3

An aluminium plate 5 mm thick was used as the metal-base body. The carbon fiber-copper composite material 1 mm thick containing 35% carbon fibers by volume, made of five sheets of hot-pressed sheets formed by weaving carbon fiber bundles as described above, was used as the intermediate material. This composite was bonded in advance to the sintered SiC ceramics described above by a brazing material composed of 40% Mn by weight the rest being Cu. Then the bonding surface of the copper-carbon fiber composite material was placed on the metal-base body of aluminium with a copper foil 100 μm thick interposed and these parts were bonded by a eutectic reaction method in which a reaction takes place between copper and aluminium at 580°C under the pressure of 5—10 kg/cm² in the atmosphere of Ar.

Table 2 shows the result of heat load test using an irradiating laser beam on the surface of the ceramic tiles assembled by the above method. In the heat load test, a laser beam of 300 W/cm$^2$ was irradiated onto the surface of the ceramic tiles at a 100 second period. In this case, water at 8 l/min was passed as the refrigerant for the metal-base body. As shown in the table, no breakdown or tearing from the bonding part of the ceramics tiles was observed even after 1000 repetitions of the heat load test. It was also shown that the heat dissipating characteristics were excellent, because the surface temperature of the ceramic tiles and the temperature of the bonding part between the ceramic tiles and the metal-base body were both very low.

| Times of heat load test | Breaking down of ceramic tiles | Tearing from the bonding part | Surface temperature of ceramic tiles (°C) | Temperature of the bonding part (°C) |
|---|---|---|---|---|
| 100 times | No | No | 200 or below | 130 or below |
| 1,000 times | No | No | 230 or below | 150 or below |

Example 4

Sintered ceramic tiles were made of SiC containing 2% BeO by weight. A JIS 304 stainless steel plate used as the metal-base body was 5 mm thick, 287 mm square and corrugated. A Cu-C composite material containing 35% fiber by volume was used as the intermediate material. The whole structure in this Example was as shown in Fig. 7 and Fig. 8.

As in the case of Example 1, the ceramics tiles were sintered SiC, which has a thermal conductivity of 0.6 cal/cm.sec. °C and electric resistance of $10^{12}$ Ω · cm at room temperature and were 10 mm thick and 40 mm square each. As shown in Fig. 8, in this sintered tile, the projecting part 4' is 5 mm thick and 5 mm deep, and the cut part 4'' is 5.2 mm thick and 5 mm deep. The water is used as a cooling medium which flows through the conduit 12 of the metal-base body 5, and each conduit 12 is 35 mm wide and 2 mm high. The groove 13 in the metal-base body is 2 mm wide and 2 mm high. The Cu-C fiber composite, which was made in the same way as in Example 2, was 1 mm thick and 40 mm square. This composite material contains 35% carbon fibers by volume and is in the form of two sheets made by plain weaving of bundles of the fibers, the sheets being superimposed and made integral by hot-pressing. A brazing material, composed of 40% Mn by weight and the rest Cu and 50 μm thick, was used for bonding the ceramics tiles 4 to the Cu-C fiber composite tiles, and a silver solder (JIS B Ag-8) 50 μm thick was used for bonding the Cu-C fiber composite to the stainless steel plate 5. First, a solder foil of a Cu-Mn alloy of 40 mm square was placed on the bonding surface of the metal-base body 5, and the tiles of Cu-C fiber composite material were placed with gaps of 1 mm on the solder foil. Then a silver solder foil was arranged on the surface of Cu-C fiber composite material, and 49 of the above SiC sintered tiles were arranged with gaps of 1 mm on the silver foil.

This assembly was transported into an electric furnace in which the pressure was controllable. The assembly was held by heating at 870°C for 30 seconds, under a pressure of 10 kg/cm$^2$ in an atmosphere of Ar. Thus, an assembly comprising ceramic tile—intermediate material—metal-base body was prepared by a single heating process. After heating, the assembly was taken out of the furnace and cooled in air. As a result, bending took place, because the metal-base body contracted considerably during cooling. However, no cracking and tearing off of the SiC tiles took place, and thermal stress in the bonding for the ceramic tiles was low. The bend in the metal-base body was removed by pressing it at room temperature. This pressing did not have serious adverse effects on the ceramic tiles because of the gaps between the ceramic tiles and grooves in the metal-based body. The falt reactor wall or the reactor wall which is concave on the side of the ceramic tiles, could be made by this method. Plastic working in this manner may relieve further the thermal stress of the bonding part.

Example 5

A metal-base body, which has a corrugated structure made of an aluminium plate 5 mm thick instead of the SUS 304 of Example 4 was used. SiC ceramics and Cu-C fiber composite material were bonded together using the same brazing material and the same conditions as in Example 4. To bond this Cu-C fiber composite material to the metal-base body, a bonding material composed of Al with 12% Si by weight and 50 μm thick, was used, and the parts were heated at 580°C under a pressure of 5—10 kg/cm$^2$, and then taken out of the furnace. Then, one side of the assembly was cooled and the other side was heated with burner. The rest is the same as in Example 4.

In this example, the bend towards the metal-base body could be reduced in comparison with Example 4. The cracking and tearing off of the SiC ceramics tiles did not take place at all, and the thermal stress of the bonding region of the sintered SiC was low. Reactor wall parts which were flat or concave on the side of the ceramic tiles, could be made, as in the case of Example 4.

EP 0 117 136 B1

**Example 6**

Alumina plate available on the market, which was 10 mm thick and 40 mm square, was used for the ceramics tiles. A corrugated JIS 304 stainless steel plate, 5 mm thick and 287 mm square, was used as the metal-base body. The structure in this example was as shown in Figs. 2 and 3. The sizes of the pathway 12 and groove 13 are the same as in Example 4.

A brazing material foil, composed of 40% Mn by weight the rest Cu and was 40 mm square and 50 μm thick, was placed on the metal-base body 5. 49 alumina tiles were placed with gaps of 1 mm on the brazing foil. This assembly was put in an electric furnace, and held by heating for 30 seconds at 870°C under a pressure of 10 kg/cm² in an atmosphere of Ar, and then cooled in air after it was taken out of the furnace. As a result the reactor wall part was bent so as to be concave on the side of metal-base body, but cracking and tearing off of sintered alumina did not take place at all. This bend can be removed by pressing the assembly on the side of ceramic tiles at room temperature; consequently the thermal stress of the bonding regions was remarkably relieved.

**Claims**

1. A nuclear fusion reactor having a vacuum vessel (1) which, in operation, encloses a plasma (2), coils (8, 9) distributed around the vacuum vessel for generating a magnetic field, the vacuum vessel having a reactor wall (3) exposed in operation to the plasma particles, said reactor wall having a metal body (5) providing a base and a plurality of heat-resisting ceramics tiles (4) metallurgically bonded to the metal body (5) which is provided with cooling means, characterised in that the ceramic tiles (4) are bonded to the metal body (5) through an intermediate material (16) having a lower coefficient of thermal expansion at room temperature than the metal body.

2. A reactor according to claim 1 wherein there are gaps (14) between the neighbouring ceramic tiles (4) and grooves (13) are formed in the metal body (5) at locations corresponding to the said gaps (14).

3. A reactor according to claim 2 wherein respective edges of the neighbouring ceramics tiles over-lap one another in the direction of projection of the irradiation of the plasma particles.

4. A reactor according to any one of claims 1 to 3, in which the thermal conductivity of the material of the ceramics tiles is more than 0.05 cal/cm.sec. °C at room temperature and the electric resistance thereof is more than $10^{-3}$ $\Omega \cdot cm$ at room temperature.

5. A reactor according to any one of the preceding claims wherein the thermal conductivity of the material of the ceramics tiles is more than 0.4 cal/cm.sec. °C at room temperature.

6. A reactor according to any one of the preceding claims in which the said ceramics tiles are made of a sintered ceramics material having a melting point or decomposition temperature (whichever is lowest) higher than 1900°C.

7. A reactor according to claim 6, in which the ceramics tiles are made of a sintered ceramics material formed of compounds of elements having atomic numbers which are not more than 14.

8. A reactor according to claim 7, in which the ceramics tiles are a ceramics material comprising beryllium and/or one or more compounds of beryllium, and more than 80% by weight of silicon carbide.

9. A reactor according to any one of the preceding claims 1 to 7 in which the ceramics tiles are composed of a sintered non-oxide ceramics material containing beryllium or one or more compounds of beryllium and silicon carbide.

10. A reactor according to claim 9 in which the said non-oxide ceramics material contains more than 80% of silicon carbide in weight and beryllium oxide.

11. A reactor according to any one of the preceding claims, in which the intermediate material (16) is a composite material of a metal and buried fibers of lower coefficient of thermal expansion at room temperature than the metal body (5).

12. A nuclear fusion reactor according to any one of the preceding claims in which the modulus of elasticity of the said intermediate material (16) is in the range $5—13 \times 10^3$ kg/mm² at room temperature and its coefficient of thermal expansion is in the range $3—12 \times 10^{-6}$/°C at room temperature.

13. A reactor according to claim 12, in which the intermediate material is a composite material comprising Cu and 30—60% by volume of buried carbon fibers.

14. A reactor according to any one of the preceding claims, in which there is a bonding layer (11, 11') of solder material between the said intermediate (16) and the metal body (5) or between the intermediate (16) and the ceramics tiles (4).

15. A reactor according to claim 14, in which the ceramics tiles (4) contain silicon carbide as principal ingredient, and the metal body (5) is of non-magnetic austenite-stainless steel, wherein the solder material is composed of 25—55% by weight of manganese and the rest copper.

16. A reactor according to claim 14, in which the ceramics tiles (4) contain silicon carbide as principal ingredient, the metal body (5) is of aluminium, and the solder material is an alloy containing 8—15% Si by weight and Al as principal ingredient.

17. A reactor according to claim 14, in which the ceramics tiles (4) are bonded to the intermediate layer (16) by the solder material which is composed of 25—55% by weight manganese the rest being copper, and the intermediate layer is a composite material containing 30—60% by volume buried carbon fiber in a matrix of copper, the intermediate layer being bonded to the metal body.

9

EP 0 117 136 B1

18. A reactor according to claim 17 in which the said intermediate layer (16) is bonded to the metal-body (5) by a brazing material.

19. A nuclear fusion reactor according to claim 18, in which the metal body (5) is composed of aluminium and the said solder material is composed of alloy containing Si 8—15% in weight and Al as principal ingredient.

## Patentansprüche

1. Kernfusionsreaktor mit einem Vakuumkessel (1), der im Betrieb ein Plasma (2) enthält, Spulen (8, 9), die um den Vakuumkessel herum verteilt angeordnet sind, für die Erzeugung eines magnetischen Feldes, wobei der Vakuumkessel eine Reaktorwand (3) hat, die im Betrieb den Plasmateilchen ausgesetzt ist, wobei die Reaktorwand einen eine Grundfläche schaffenden Metallkörper (5) sowie eine Vielzahl von hitzebeständigen Keramikfliesen (4) hat, die metallurgisch mit dem Metallkörper (5) verbunden sind, der mit einer Kühleinrichtung versehen ist, dadurch gekennzeichnet, daß die Keramikfliesen (4) mit dem Metallkörper (5) über ein Zwischenmaterial (16) verbunden sind, das bei Raumtemperatur einen geringeren Wärmeausdehnungskoeffizienten als der Metallkörper hat.

2. Reaktor nach Anspruch 1, wobei zwischen den benachbarten Keramikfliesen (4) Spalte vorgesehen sind, und in dem Metallkörper (5) an Stellen, die den Spalten (14) entsprechen, Nuten (13) gebildet sind.

3. Reaktor nach Anspruch 2, wobei jeweilige Kanten der benachbarten Keramikfliesen in der Projektionsrichtung der Einstrahlung der Plasmateilchen einander überlappen.

4. Reaktor nach einem der Ansprüche 1 bis 3, bei dem die Wärmeleitfähigkeit des Materials der Keramikfliesen bei Raumtemperatur mehr als 0,05 cal/cm.sec. °C beträgt und sein elektrischer Widerstand bei Raumtemperatur mehr als $10^{-3}$ $\Omega \cdot$ cm beträgt.

5. Reaktor nach einem der vorhergehenden Ansprüche, wobei die Wärmeleitfähigkeit des Materials der Keramikfliesen bei Raumtemperatur mehr als 0,4 cal/cm.sec. °C beträgt.

6. Reaktor nach einem der vorhergehenden Ansprüche, bei dem die Keramikfliesen aus einem gesinterten Keramikmaterial hergestellt sind, dessen Schmelzpunkt oder Zersetzungstemperatur (der jeweils niedrigere Wert) höher als 1900°C ist.

7. Reaktor nach Anspruch 6, bei dem die Keramikfliesen aus einem gesinterten Keramikmaterial hergestellt sind, das aus Verbindungen von Elementen gebildet ist, deren Ordnungszahlen nicht höher als 14 sind.

8. Reaktor nach Anspruch 7, bei dem die Keramikfliesen ein Keramikmaterial sind, das Beryllium und/oder eine oder mehrere Verbindungen von Beryllium sowie mehr als 80 Gew.-% Siliziumkarbid aufweist.

9. Reaktor nach einem der vorhergehenden Ansprüche 1 bis 7, bei dem die Keramikfliesen aus einem gesinterten Nicht-Oxid-Keramikmaterial bestehen, das Beryllium oder eine oder mehrere Verbindungen von Beryllium sowie Siliziumkarbid enthält.

10. Reaktor nach Anspruch 9, bei dem das genannte Nicht-Oxid-Keramikmaterial mehr als 80 Gew.-% Siliziumkarbid und Berylliumoxid enthält.

11. Reaktor nach einem der vorhergehenden Ansprüche, bei dem das Zwischenmaterial (16) ein Verbundmaterial aus einem Metall und eingebetteten Fasern mit einem geringeren Wärmeausdehnungskoeffizienten bei Raumtemperatur als der Metallkörper (5) ist.

12. Kernfusionsreaktor nach einem der vorhergehenden Ansprüche, bei dem der Elastizitätsmodul des Zwischenmaterials (16) bei Raumtemperatur im Bereich von 5 bis $13 \times 10^3$ kg/mm², und sein Wärmeausdehnungskoeffizient bei Raumtemperatur im Bereich von 3 bis $12 \times 10^{-6}$/°C liegt.

13. Reaktor nach Anspruch 12, bei dem das Zwischenmaterial ein Verbundmaterial ist, das Cu und 30 bis 60 Vol.-% von eingebetteten Kohlenstoff-Fasern aufweist.

14. Reaktor nach einem der vorhergehenden Ansprüche, bei dem sich zwischen dem Zwischenmaterial (16) und dem Metallkörper (5) oder zwischen dem Zwischenmaterial (16) und den Keramikfliesen (4) eine Bindeschicht (11, 11') aus Lötmaterial befindet.

15. Reaktor nach Anspruch 14, bei dem die Keramikfliesen (4) Siliziumkarbid als Hauptbestandteil enthalten, und der Metallkörper (5) aus nicht-magnetischem rostfreien Austenit-Stahl besteht, wobei das Lötmaterial aus 25 bis 55 Gew.-% Mangan und dem Rest Kupfer besteht.

16. Reaktor nach Anspruch 14, bei dem die Keramikfliesen (4) Siliziumkarbid als Hauptbeutandteil enthalten, der Metallkörper (5) aus Aluminium besteht, und das Lötmaterial eine Legierung ist, die 8 bis 15 Gew.-% Si und Al als Hauptbestandteil enthält.

17. Reaktor nach Anspruch 14, bei dem die Keramikfliesen (4) mit der Zwischenschicht (16) durch das Lötmaterial verbunden sind, das aus 25 bis 55 Gew.-% Mangan mit dem Rest Kupfer besteht, und die Zwischenschicht ein Verbundmaterial ist, das 30 bis 60 Vol.-% von eingebetteten Kohlenstoffasern in einer Kupfermatrix enthält, wobei die Zwischenschicht mit dem Metallkörper verbunden ist.

18. Reaktor nach Anspruch 17, bei dem die Zwischenschicht (16) mit dem Metallkörper (5) durch ein Hartlötmaterial verbunden ist.

19. Kernfusionsreaktor nach Anspruch 18, bei dem der Metallkörper (5) aus Aluminium besteht, und das Lötmaterial aus einer Legierung besteht, die 8 bis 15 Gew.-% Si und Al als Hauptbestandteil enthält.

## EP 0 117 136 B1

**Revendications**

1. Réacteur de fusion nucléaire comportant une enceinte à vide (1) qui, en fonctionnement, entoure un plasma (2), des bobines (8, 9) réparties autour de l'enceinte à vide pour produire un champ magnétique, l'enceinte à vide comportant une paroi (3) du réacteur exposée, en fonctionnement, aux particules de plasma, ladite paroi du réacteur comportant un corps métallique (5) formant une base et une pluralité de carreaux céramiques réfractaires (4) fixés par voie métallurgique au corps métallique (5), qui comporte des moyens de refroidissement, caractérisé en ce que les carreaux céramiques (4) sont fixés au corps métallique (5) à l'aide d'un matériau intermédiaire (16) possédant un coefficient de dilatation thermique à température ambiante, inférieur à celui du corps métallique.

2. Réacteur selon la revendication 1, dans lequel il existe des intervalles (14) entre les carreaux céramiques voisins (4), et des rainures (13) sont ménagées dans le corps métallique (5) en des emplacements correspondant auxdits intervalles (14).

3. Réacteur selon la revendication 2, dans lequel des bords des carreaux céramiques voisins se chevauchent entre eux dans la direction de projection de l'irradiation des particules de plasma.

4. Réacteur selon l'une quelconque des revendications 1 à 3, dans lequel la conductibilité thermique du matériau des carreaux céramiques est supérieure à 0,05 cal/cm.s. °C à la température ambiante et sa résistance électrique est supérieure à $10^{-3}$ $\Omega \cdot$ cm à la température ambiante.

5. Réacteur selon l'une quelconque des revendications précédentes, dans lequel la conductibilité thermique du matériau des carreaux céramiques est supérieure à 0,4 cal/cm.s. °C à la température ambiante.

6. Réacteur selon l'une quelconque des revendications précédentes, dans lequel lesdits carreaux céramiques sont réalisés en un matériau céramique fritté possédant un point de fusion ou une température de décomposition (la valeur qui est la plus faible) supérieure à 1900°C.

7. Réacteur selon la revendication 6, dans lequel les carreaux céramiques sont réalisés en un matériau céramique fritté formé de composés d'éléments possédant des numéros atomiques inférieurs à 14.

8. Réacteur selon la revendication 7, dans lequel les carreaux céramiques sont constitués par un matériau céramique comprenant du béryllium et/ou un ou plusieurs composés de béryllium et plus de 80% en poids de carbure de silicium.

9. Réacteur selon l'une quelconque des revendications précédentes 1 à 7, dans lequel les carreaux céramiques sont constitués par un matériau céramique fritté non constitué par un oxyde et contenant du béryllium ou un ou plusieurs composés de béryllium et du carbure de silicium.

10. Réacteur selon la revendication 9, dans lequel ledit matériau céramique non formé d'un oxyde contient plus de 80% de carbure de silicium en poids et de l'oxyde de béryllium.

11. Réacteur selon l'une quelconque des revendications précédentes, dans lequel le matériau intermédiaire (16) est un matériau composite formé d'un métal et de fibres noyées possédant un coefficient de dilatation thermique à la température ambiante, inférieur à celui du corps métallique (5).

12. Réacteur de fusion nucléaire selon l'une quelconque des revendications précédentes, dans lequel le module d'élasticité dudit matériau intermédiaire (16) se situe dans la gamme de 5—13×10³ kg/mm² à la température ambiante et son coefficient de dilatation thermique se situe dans la gamme 3—12×10⁻⁶/°C à la température ambiante.

13. Réacteur selon la revendication 12, dans lequel le matériau intermédiaire est un matériau composite comprenant du Cu et 30—60% en volume de fibres de carbone noyées.

14. Réacteur selon l'une quelconque des revendications précédentes, dans lequel il existe une couche de liaison (11, 11') formée d'un matériau de soudure entre ledit matériau intermédiaire (16) et le corps métallique (5) ou entre le matériau intermédiaire (16) et les carreaux céramiques (4).

15. Réacteur selon la revendication 14, dans lequel les carreaux céramiques (4) contiennent du carbure de silicium comme constituant principal, et le corps métallique (5) est formé par de l'acier austénitique inoxydable amagnétique, dans lequel le matériau de soudure est constitué par 25—55% en poids de manganèse, le reste étant constitué par du cuivre.

16. Réacteur selon la revendication 14, dans lequel les carreaux céramiques (4) contiennent du carbure de silicium comme constituant principal, le corps métallique (5) est formé d'aluminium, et le matériau de soudure est un alliage contenant 8—15% de Si en poids et du Al comme constituant principal.

17. Réacteur selon la revendication 14, dans lequel les carreaux céramiques (4) sont fixés à la couche intermédiaire (16) par le matériau de soudure qui est constitué par 25—55% en poids de manganèse, le reste étant formé de cuivre, et la couche intermédiaire est formée d'un matériau composite comprenant 30—60% en volume de fibres de carbone ensevelies dans une matrice de cuivre, la couche intermédiaire étant fixée au corps métallique.

18. Réacteur selon la revendication 17, dans lequel ladite couche intermédiaire (16) est fixée au corps métallique (5) au moyen d'un matériau de brasage.

19. Réacteur de fusion nucléaire selon la revendication 18, dans lequel le corps métallique (5) est constitué d'aluminium et ledit matériau de soudure est constitué par un alliage contenant 8—15% de Si en poids et du Al en tant que constituant principal.

11

FIG. 1

FIG. 2

FIG. 3

## FIG. 4

## FIG. 5

## FIG. 6

## FIG. 7

## FIG. 8

# FIG. 9